# EUROPEAN PATENT APPLICATION

(11) **EP 4 813 823 A1**
(43) Date of publication of application: **30.09.2026**
(21) Application number: 25166391.0
(22) Date of filing: 26.03.2025
(51) Int. Cl.: B62M 6/75

(54) **AUXILIARY POWER DEVICE**

(71) Applicant: ASUSTek Computer Inc., Taipei City 11259 (TW)
(72) Inventor: WU, Hsin-Han, 11259 Taipei City (TW); CHANG, Yuan-Hung, 11259 Taipei City (TW); WU, Chin-Ju, 11259 Taipei City (TW); HO, Chi-Hwa, 11259 Taipei City (TW)
(74) Representative: Hoefer & Partner Patentanwälte mbB

(57) **Abstract**

The auxiliary power device (100) provided includes a fixing base (110) disposed on a seat tube (210) of a bicycle (200), a main body (120), a driving module (130), and two positioning rods (140). The driving module (130) includes a motor (131) with a rotating shaft in a center and a driving wheel (132) covering around the motor (131) and adapted to be in contact with a rear wheel (220) of the bicycle (200). Each of the two positioning rods (140) has a first end (E1) and a second end (E2). The two first ends (E1) are connected to the main body (120), and the two second ends (E2) are rotatably connected to two opposite ends of the rotating shaft respectively.

## Description

### BACKGROUND

### Technical Field

The disclosure relates to a power device, and more particularly, to an auxiliary power device combined with a bicycle.

### Description of Related Art

Bicycles are a common means of transportation in modem cities, which is used to supplement short-distance transportation. Since riding a bicycle does not generate carbon emissions, it may increase exercise of a user while responding to environmental protection. However, human-driven bicycles are not conducive for ordinary people to ride on sloped roads. Therefore, electric bicycles are developed. A motor and an accumulator battery are combined with the bicycle, and the motor may be driven by electricity to assist the electric bicycle in moving.

However, the existing electric bicycles are manufactured according to specific specifications and may not be modified by the user. When the electric bicycle is damaged, it is required to be sent back to an original factory or a designated location for repair. Therefore, it has disadvantages such as high price and difficult repair. Therefore, the existing electric bicycles are difficult to be popularized in ordinary families.

### SUMMARY

The disclosure provides an auxiliary power device, which is adapted to human-powered bicycles with various specifications, thereby providing power to drive the bicycles to move. Auxiliary power devices according to the invention are defined in the independent claims. The dependent claims define preferred embodiments thereof.

An auxiliary power device in the disclosure is adapted to be installed on a bicycle. The bicycle has a seat tube, a stand tube, a seat stay, and a rear wheel. The auxiliary power device includes a fixing base, a main body, a driving module, and two positioning rods. The fixing base is disposed on the seat tube, the stand tube, or the seat stay. The main body has a first side and a second side opposite to each other. The first side is connected to the fixing base, and the second side is away from the seat tube, the stand tube, or the seat stay and has a first outer contour. The driving module includes a motor and a driving wheel. The motor has a rotating shaft in a center, and the driving wheel covers around the motor and is adapted to be in contact with the rear wheel. Each of the positioning rods has a first end and a second end opposite to each other. The two first ends are connected to the second side, and the two second ends are rotatably connected to two opposite ends of the rotating shaft respectively. When the driving module is in a stationary mode, the two positioning rods fit the first outer contour. When the driving module is in a driving mode, the motor drives the driving wheel to rotate toward a first direction relative to the two positioning rods, thereby driving the rear wheel to rotate toward a second direction opposite to the first direction. At the same time, the driving wheel rubs against the rear wheel to drive the two positioning rods to expand on the first outer contour.

An auxiliary power device in the disclosure is adapted to be installed on a bicycle. The bicycle has a head tube and a front wheel. The auxiliary power device includes a fixing base, a main body, a driving module, and two positioning rods. The fixing base is disposed on the head tube or a front fork. The main body has a first side and a second side opposite to each other. The first side is connected to the fixing base, and the second side is away from the head tube and the front fork and has a second outer contour. The driving module includes a motor and a driving wheel. The motor has a rotating shaft in a center, and the driving wheel covers around the motor and is adapted to be in contact with the front wheel. Each of the positioning rods has a first end and a second end opposite to each other. The two first ends are connected to the second side, and the two second ends are rotatably connected to two opposite ends of the rotating shaft respectively. When the driving module is in a stationary mode, the two positioning rods fit the second outer contour of the main body. When the driving module is in a driving mode, the motor drives the driving wheel to rotate toward a first direction relative to the two positioning rods, thereby driving the front wheel to rotate toward a second direction opposite to the first direction. At the same time, the driving wheel rubs against the front wheel to drive the main body to rotate toward the second direction.

Based on the above, the auxiliary power device in the disclosure is adapted to be installed on the seat tube or the head tube of the bicycle to be in contact with the rear wheel or the front wheel. In the driving mode of the driving module, the driving wheel is driven by the motor to rotate toward the first direction to drive the rear wheel or the front wheel to rotate toward the second direction opposite to the first direction. At the same time, the driving wheel generates the positive force applied to the rear wheel or the front wheel during a rotation process to enhance the friction between the two and avoid slipping and idling between the driving wheel and the rear wheel or the front wheel, so as to maintain the power transmission efficiency of the auxiliary power device. In particular, the auxiliary power device according to the invention might combine the features of both embodiments corresponding to the two independent claims and their respective dependent claims, respectively, so that the driving wheel might be adapted to rub against the rear wheel to drive the two positioning rods to expand on the first outer contour as well as against the front wheel to drive the main body to rotate toward the second direction.

### BRIEF DESCRIPTION OF THE DRAWINGS

FIG. 1A is a schematic plan diagram of an auxiliary power device combined with a bicycle according to an embodiment of the disclosure.
FIG. 1B is a schematic structural block diagram of an auxiliary power device according to an embodiment of the disclosure.
FIG. 1C is a schematic perspective diagram of a driving module of the auxiliary power device in FIG. 1A.
FIG. 2A is a schematic plan diagram of the auxiliary power device in FIG. 1A being switched to a stationary mode.
FIG. 2B is a schematic plan diagram of the auxiliary power device in FIG. 1A being switched to a driving mode.
FIG. 3 is a schematic plan diagram of an auxiliary power device combined with a bicycle according to another embodiment of the disclosure.
FIG. 4A is a schematic plan diagram of the auxiliary power device in FIG. 3 being switched to a stationary mode.
FIG. 4B is a schematic plan diagram of the auxiliary power device in FIG. 3 being switched to a driving mode.

### DETAILED DESCRIPTION OF DISCLOSED EMBODIMENTS

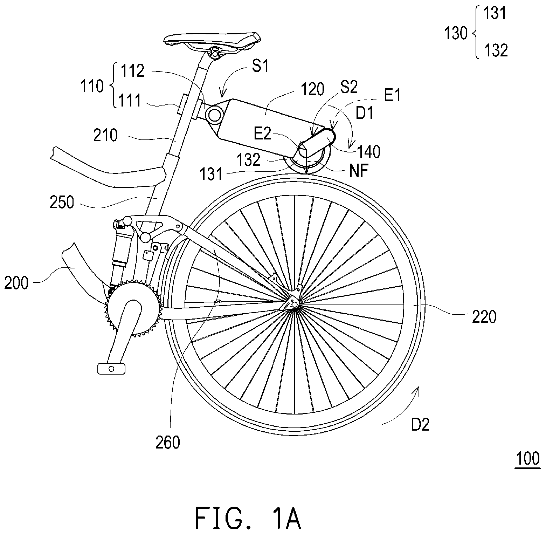

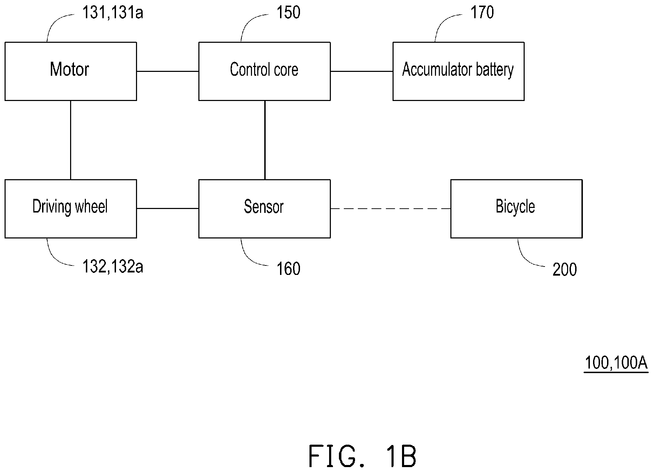

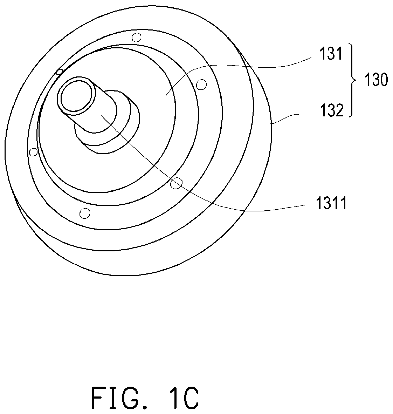

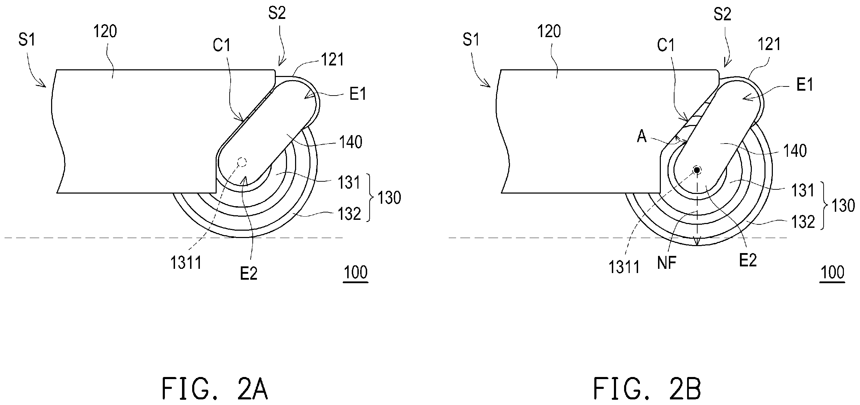

FIG. 1A is a schematic plan diagram of an auxiliary power device combined with a bicycle according to an embodiment of the disclosure. FIG. 1B is a schematic structural block diagram of an auxiliary power device according to an embodiment of the disclosure. FIG. 1C is a schematic perspective diagram of a driving module of the auxiliary power device in FIG. 1A. FIG. 2A is a schematic plan diagram of the auxiliary power device in FIG. 1A being switched to a stationary mode. FIG. 2B is a schematic plan diagram of the auxiliary power device in FIG. 1A being switched to a driving mode.

Referring to FIG. 1A, an auxiliary power device 100 in the disclosure is adapted to be installed on any bicycle 200. After being started, the auxiliary power device 100 provides power to a front wheel or a rear wheel of the bicycle 200, thereby driving the front wheel or the rear wheel to rotate to achieve an effect of assisting the bicycle to move. Furthermore, the auxiliary power device 100 is detachable. When damaged, the auxiliary power device 100 may be directly disassembled to facilitate repair or replacement. In addition, a rotational speed or torque specification of the auxiliary power device 100 may be replaced according to riding requirements, which increases flexibility of use of the auxiliary power device 100. In short, the auxiliary power device 100 with corresponding specifications may be replaced for any bicycle according to different riding environments.

Referring to FIGs. 1A to 1C, the auxiliary power device 100 in the disclosure is installed on the bicycle 200, and the bicycle 200 has a seat tube 210, a rear wheel 220, a stand tube 250, and a seat stay 260. The auxiliary power device 100 includes a fixing base 110, a main body 120, a driving module 130, two positioning rods 140, a control core 150, a sensor 160, and an accumulator battery 170.

Preferably, the sensor 160 is a rotational speed sensor, a torque sensor, or a cadence sensor, but the disclosure is not limited thereto.

The fixing base 110 is disposed on the seat tube 210, the stand tube 250, or the seat stay 260 of the bicycle 200. FIG. 1A shows that the seat tube 210 is taken as an example. In detail, the fixing base 110 has a sleeve portion 111 and an extension portion 112. The sleeve portion 111 is sleeved on the seat tube 210. The extension portion 112 is formed on one side of the sleeve portion 111 and is suspended above the rear wheel 220.

Referring to FIGs. 1A and 1C, the main body 120 has a first side S1 and a second side S2 opposite to each other. The first side S1 is connected to the fixing base 110, and the second side S2 is away from the seat tube 210 and has a first outer contour C1.

The driving module 130 includes a motor 131 and a driving wheel 132, and the motor 131 has a rotating shaft 1311 in a center. The driving wheel 132 covers around the motor 131 and is adapted to be in contact with the rear wheel 220. The driving wheel 132 partially protrudes from the main body 120 to be in contact with the rear wheel 220.

In addition, the first side S1 of the main body 120 is pivotally connected to the extension portion 112 of the fixing base 110, which means that the main body 120 may adjust an included angle according to appearance dimensions of the seat tube 210 and the rear wheel 220, so that the driving wheel 132 of the driving module 130 may be in close contact with the rear wheel 220 to avoid slipping, idling, or poor power transmission efficiency.

Each of the positioning rods 140 has a first end E1 and a second end E2 opposite to each other. The two first ends E1 of the two positioning rods 140 are connected to the second side S2 of the main body 120, and the two second ends E2 are rotatably connected to two opposite ends of the rotating shaft 1311.

In detail, the main body 120 has a connecting rod 121 disposed on the second side S2 of the main body 120, and the two first ends E1 of the two positioning rods 140 are rotatably connected to the connecting rod 121. Furthermore, the first outer contour C1 forms an abutting portion, and a shape of the abutting portion corresponds to shapes of the two positioning rods 140.

Referring to FIGs. 1A and 2B, the control core 150 is disposed in the main body 120 and is coupled to the motor 131. The sensor 160 is coupled to the control core 150. The accumulator battery 170 is disposed in the main body 120 and is coupled to the control core 150. In an actual application, after receiving a start command, the control core 150 connects the accumulator battery 170 and the motor 131, allowing the accumulator battery 170 to output a current to the motor 131. The sensor 160 is installed at any position of the bicycle 200 and is used to detect information of the rear wheel 220, such as detecting the rotational speed, sending the rotational speed back to the control core 150, and allowing the control core 150 to dynamically adjust the rotational speed of the motor 131, so as to cope with horizontal sections, downhill sections, or uphill sections.

Referring to FIGs. 1A, 1B, and 2A, when the driving module 130 is in the stationary mode, the control core 150 does not receive the start command, and the accumulator battery 170 does not supply the power to the motor 131. Therefore, the two positioning rods 140 fit the first outer contour C1 of the second side S2 of the main body 120. That is, the two positioning rods 140 overlap the abutting portion.

Referring to FIGs. 1A, 1B, and 2B, when the driving module 130 is in the driving mode, the control core 150 receives the start command and controls the accumulator battery 170 to supply the power to the motor 131. Therefore, the motor 131 drives the driving wheel 132 to rotate toward a first direction D1 relative to the two positioning rods 140, and the driving wheel 132 drives the rear wheel 220 to rotate toward a second direction D2 opposite to the first direction D1. At the same time, the driving wheel 132 rubs against the rear wheel 220 to drive the two positioning rods 140 to expand on the first outer contour C1 of the main body 120. Therefore, there is an included angle A between the two positioning rods 140 and the first outer contour C1.

In addition, friction between the driving wheel 132 and the rear wheel 220 will drive the two positioning rods 140 to expand on the main body 120. As the included angle A increases, positive force NF applied by the driving wheel 132 to the rear wheel 220 also increases. The positive force NF helps the driving wheel 132 and the rear wheel 220 to fit closely to ensure that the bicycle moves forward normally. In addition, the greater the power generated by the driving wheel 132, the greater the positive force NF applied to the rear wheel 220.

Referring to FIGs. 1A and 1B, when the motor 131 is in a braking mode, the control core 150 controls the motor 131 to lock the rotating shaft 1311 and the driving wheel 132, so that the driving wheel 132 may not freely rotate relative to the second ends E2 of the two positioning rods 140, and that the rear wheel 220 continuously rubs against the driving wheel 132 to achieve a braking effect. In addition, the control core 150 disconnects the accumulator battery 170 and the motor 131, so that the driving wheel 132 and the rotating shaft 1311 freely rotate relative to the second ends E2 of the two positioning rods 140, and that the rear wheel 220 continuously drives and rubs against the driving wheel 132 to achieve the braking effect.

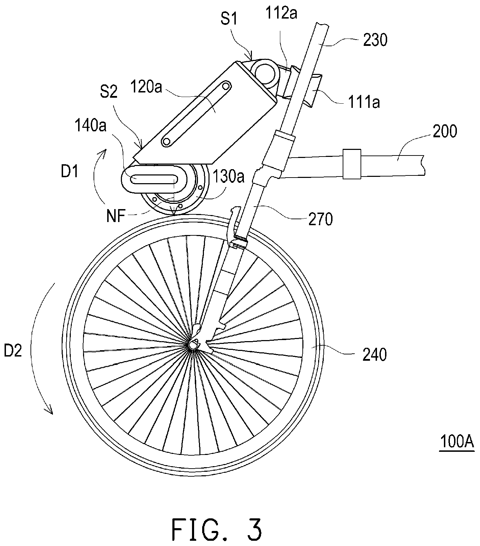

Referring to FIGs. 3 and 1B, an auxiliary power device 100A in this embodiment is installed on a head tube 230, a front wheel 240, and a front fork 270 of the bicycle 200. The auxiliary power device 100A includes a fixing base 110a, a main body 120a, a driving module 130a, and two positioning rods 140a.

The fixing base 110 a is disposed on the head tube 230 or the front fork 270. FIG. 3 shows that the head tube 230 is taken as an example. In detail, the fixing base 110a has a sleeve portion 111a and an extension portion 112a. The sleeve portion 111a is sleeved on the head tube 230. The extension portion 112a is formed on the sleeve portion 111a and is located above the front wheel 240.

The main body 120a has the first side S1 and the second side S2 opposite to each other. The first side S1 is rotatably connected to the extension portion 112a of the fixing base 110a, and the second side S2 is away from the head tube 230 and has a second outer contour C2.

The driving module 130a includes a motor 131a and a driving wheel 132a. The motor 131a has a rotating shaft 1311a in the center. The driving wheel 132a covers around the motor 131a and is adapted to be in contact with the front wheel 240.

Each of the positioning rods 140a has the first end E1 and the second end E2 opposite to each other. The two first ends E1 of the two positioning rods 140a are connected to the second side S2 of the main body 120a, and the two second ends E2 are rotatably connected to two opposite ends of the rotating shaft 1311a. The driving wheel 132a is rotatably connected to the second end E2 of each of the positioning rods 140a, and the driving wheel 132a partially protrudes from each of the positioning rods 140a to be in contact with the front wheel 240.

In detail, the main body 120a has a connecting rod 121a disposed on the second side S2 of the main body 120a, and the two first ends E1 of the two positioning rods 140a are connected to a second connecting rod 122a. The second outer contour C2 forms a stop surface, and the stop surface is aligned with the two positioning rods 140a. In this embodiment, the two positioning rods 140a are locked to the connecting rod 121a. Therefore, the two positioning rods 140a continuously abut against the stop surface of the second outer contour C2.

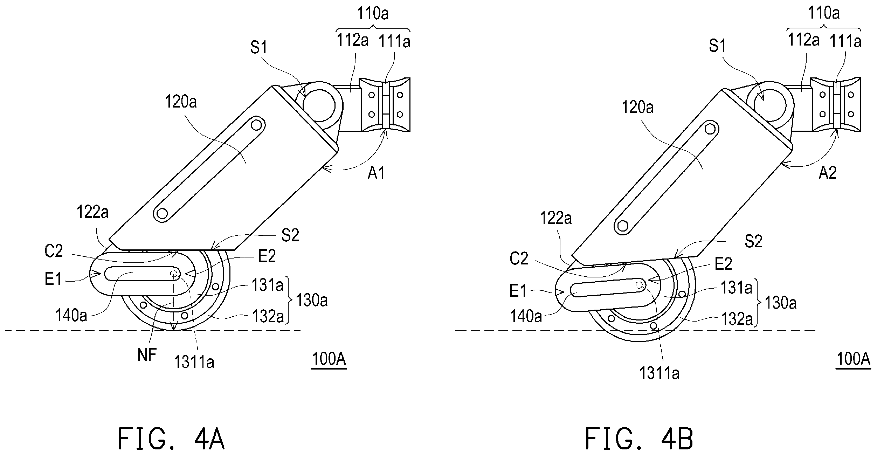

Referring to FIGs. 3, 1B, and 4A, when the driving module 130a is in the stationary mode, the control core 150 does not receive the start command, the accumulator battery 170 does not supply the power to the motor 131a, and the two positioning rods 140a fit the second outer contour C2 of the main body 120a. In addition, there is a first included angle A1 between the main body 120a and the fixing base 110a.

Referring to FIGs. 3, 1B, and 4B, when the driving module 130a is in the driving mode, the motor 131a drives the driving wheel 132a to rotate toward the first direction D1 relative to the two positioning rods 140a, thereby driving the front wheel 240 to rotate toward the second direction D2 opposite to the first direction D1. At the same time, the driving wheel 132a rubs against the front wheel 240 to drive the first side S1 of the main body 120a to rotate toward the second direction D2 relative to the extension portion 112a. Therefore, in the driving mode, there is a second included angle A2 between the main body 120a and the fixing base 110a that is less than the first included angle A1.

In addition, friction between the driving wheel 132a and the front wheel 240 will drive the main body 120a and the two positioning rods 140a to rotate relative to the fixing base 110a, switched from the first included angle A1 to the second included angle A2. As the angle decreases, the positive force NF applied by the driving wheel 132a to the front wheel 240 also increases. The positive force NF helps the driving wheel 132a and the front wheel 240 to fit closely to ensure that the bicycle moves forward normally. In addition, the greater the power generated by the driving wheel 132a, the greater the positive force NF applied to the front wheel 240.

Referring to FIGs. 3 and 1B, when the driving module 130 is in the braking mode, the control core 150 controls the motor 131a to lock the driving wheel 132a and the rotating shaft 1311a, so that the driving wheel 132a may not freely rotate relative to the second ends E2 of the two positioning rods 140a, and that the front wheel 240 continuously rubs against the driving wheel 132a to achieve the braking effect. In addition, the control core 150 disconnects the accumulator battery 170 and the motor 131a, so that the driving wheel 132a and the rotating shaft 1311a freely rotate relative to the second ends E2 of the two positioning rods 140a, and that the rear wheel 220 continuously drives and rubs against the driving wheel 132a to achieve the braking effect.

Based on the above, the auxiliary power device in the disclosure is adapted to be installed on the seat tube or the head tube of the bicycle to be in contact with the rear wheel or the front wheel. In the driving mode of the driving module, the motor drives the driving wheel to rotate toward the first direction to drive the rear wheel or the front wheel to rotate toward the second direction opposite to the first direction. At the same time, the driving wheel generates the positive force applied to the rear wheel or the front wheel during a rotation process to enhance the friction between the two and avoid slipping and idling between the driving wheel and the rear wheel or the front wheel, so as to maintain the power transmission efficiency of the auxiliary power device.

## Claims

1. An auxiliary power device (100, 100A), adapted to be installed on a bicycle (200), wherein the bicycle (200) has a seat tube (210), a stand tube (250), a seat stay (260), and a rear wheel (220), and the auxiliary power device (100, 100A) comprises:
a fixing base (110, 110a), adapted to be disposed on the seat tube (210), the stand tube (250), or the seat stay (260);
a main body (120, 120a) having a first side (S1) and a second side (S2) opposite to each other, wherein the first side (S1) is connected to the fixing base (110, 110a), and the second side (S2) is adapted to be away from the seat tube (210), the stand tube (250), or the seat stay (260) and has a first outer contour (C1);
a driving module (130, 130a) comprising a motor (131, 131a) and a driving wheel (132, 132a), wherein the motor (131, 131a) has a rotating shaft (1311, 1311a) in a center, and the driving wheel (132, 132a) covers around the motor (131, 131a) and is adapted to be in contact with the rear wheel (220); and
two positioning rods (140, 140a), wherein each of the positioning rods (140, 140a) has a first end (E1) and a second end (E2) opposite to each other, the two first ends (E1) are connected to the second side (S2), and the two second ends (E2) are rotatably connected to two opposite ends of the rotating shaft (1311, 1311a) respectively,
wherein when the driving module (130, 130a) is in a stationary mode, the two positioning rods (140, 140a) fit the first outer contour (C1), when the driving module (130, 130a) is in a driving mode, the motor (131, 131a) drives the driving wheel (132, 132a) to rotate toward a first direction (D1) relative to the two positioning rods (140, 140a), thereby adapted to drive the rear wheel (220) to rotate toward a second direction (D2) opposite to the first direction (D1), and at the same time, the driving wheel (132, 132a) is adapted to rub against the rear wheel (220) to drive the two positioning rods (140, 140a) to expand on the first outer contour (C1).

2. The auxiliary power device (100, 100A) according to claim 1, wherein the fixing base (110, 110a) has a sleeve portion (111, 111a) and an extension portion (112, 112a), the sleeve portion (111, 111a) is adapted to be sleeved on the seat tube (210), the stand tube (250), or the seat stay (260), and the extension portion (112, 112a) is formed on the sleeve portion (111, 111a) and is adapted to be located above the rear wheel (220).

3. The auxiliary power device (100, 100A) according to claim 1 or 2, wherein the main body (120, 120a) has a connecting rod (121, 121a) disposed on the second side (S2), and the two first ends (E1) of the two positioning rods (140, 140a) are rotatably connected to the connecting rod (121, 121a).

4. The auxiliary power device (100, 100A) according to any one of claims 1 to 3, wherein the first outer contour (C1) forms an abutting portion, and a shape of the abutting portion corresponds to a shape of the positioning rods (140, 140a).

5. The auxiliary power device (100, 100A) according to any one of claims 1 to 4, wherein in a braking mode of the driving module (130, 130a), the motor (131, 131a) locks the rotating shaft (1311, 1311a) and the driving wheel (132, 132a), or the driving wheel (132, 132a) freely rotates relative to the positioning rods (140, 140a).

6. The auxiliary power device (100, 100A) according to any one of claims 1 to 5, wherein the driving wheel (132, 132a) partially protrudes from the main body (120, 120a).

7. An auxiliary power device (100, 100A), adapted to be installed on a bicycle (200), wherein the bicycle (200) has a head tube (230), a front fork (270), and a front wheel (240), the auxiliary power device (100, 100A) comprises:
a fixing base (110, 110a), adapted to be disposed on the head tube (230) or the front fork (270);
a main body (120, 120a) having a first side (S1) and a second side (S2) opposite to each other, wherein the first side (S1) is connected to the fixing base (110, 110a), and the second side (S2) is adapted to be away from the head tube (230) and the front fork (270) and has a second outer contour (C2);
a driving module (130, 130a) comprising a motor (131, 131a) and a driving wheel (132, 132a), wherein the motor (131, 131a) has a rotating shaft (1311, 1311a) in a center, and the driving wheel (132, 132a) covers around the motor (131, 131a) and is adapted to be in contact with the front wheel (240); and
two positioning rods (140, 140a), wherein each of the positioning rods (140, 140a) has a first end (E1) and a second end (E2) opposite to each other, the two first ends (E1) are connected to the second side (S2), and the two second ends (E2) are rotatably connected to two opposite ends of the rotating shaft (1311, 1311a) respectively,
wherein when the driving module (130, 130a) is in a stationary mode, the two positioning rods (140, 140a) fit the second outer contour (C2) of the main body (120, 120a), when the driving module (130, 130a) is in a driving mode, the motor (131, 131a) drives the driving wheel (132, 132a) to rotate toward a first direction (D1) relative to the two positioning rods (140, 140a), thereby adapted to drive the front wheel (240) to rotate toward a second direction (D2) opposite to the first direction (D1), and at the same time, the driving wheel (132, 132a) is adapted to rub against the front wheel (240) to drive the main body (120, 120a) to rotate toward the second direction (D2).

8. The auxiliary power device (100, 100A) according to claim 7, wherein the fixing base (110, 110a) has a sleeve portion (111, 111a) and an extension portion (112, 112a), the sleeve portion (111, 111a) is adapted to be sleeved on the head tube (230) or the front fork (270), and the extension portion (112, 112a) is formed on the sleeve portion (111, 111a) and is adapted to be located above the front wheel (240).

9. The auxiliary power device (100, 100A) according to claim 7 or 8, wherein the main body (120, 120a) has a connecting rod (121, 121a) disposed on the second side (S2), and the two first ends (E1) of the two positioning rods (140, 140a) are connected to the connecting rod (121, 121a).

10. The auxiliary power device (100, 100A) according to any one of claims 7 to 9, wherein the second outer contour (C2) forms a stop surface, and the stop surface is aligned with the two positioning rods (140, 140a).

11. The auxiliary power device (100, 100A) according to any one of claims 7 to 10, wherein in a braking mode of the driving module (130, 130a), the motor (131, 131a) locks the rotating shaft (1311, 1311a) and the driving wheel (132, 132a), or the driving wheel (132, 132a) freely rotates relative to the positioning rods (140, 140a).

12. The auxiliary power device (100, 100A) according to any one of claims 7 to 11, wherein the driving wheel (132, 132a) partially protrudes from the main body (120, 120a).
